# EUROPEAN PATENT APPLICATION

(11) **EP 4 640 041 A1**
(43) Date of publication of application: **29.10.2025**
(21) Application number: 24171512.7
(22) Date of filing: 22.04.2024
(51) Int. Cl.: A01G 7/00

(54) **DETERMINING LOCATIONS FOR PLANTS**

(71) Applicant: Helvar Oy Ab, 02150 Espoo (FI)
(72) Inventor: Juslén, Henri, 02150 ESPOO (FI); Takala, Pasi, 02150 ESPOO (FI); Roine, Amanda, 02150 ESPOO (FI)
(74) Representative: Berggren Oy

(57) **Abstract**

The invention concerns a system (100) and method (200) for managing plants in one or more spaces or areas. The system (100) comprising a processing apparatus (120) arranged to receiving respective first sensor data for a plurality of locations in said one or more spaces or areas, wherein the first sensor data comprises at least one of the following: respective occupancy data for said plurality of locations, where the occupancy data for a given location is descriptive of occupancy at the respective location as a function of time, and respective air characteristic data for said plurality of locations, where the air characteristic data for a given location is descriptive of at least one characteristic of air at the respective location as a function of time; receiving respective light sensor data for said plurality of locations, wherein the light sensor data for a given location is descriptive of light level at the respective location as a function of time; and selecting, from said plurality of locations, one or more locations for the plants based on the first sensor data in consideration of the light sensor data.

## Description

### TECHNICAL FIELD

The present invention relates to determining suitable locations for plants in one or more spaces or areas in consideration of information on environmental characteristics in the one or more spaces or areas.

### BACKGROUND

Plants are commonly used for decoration purposes in indoor environments, such as office spaces. Indoor plants do not only serve aesthetic purposes, but according to a recent study the indoor plants are also found to provide positive psychological effects for the occupants of the space, such as boosting positive emotions, reducing negative feelings and relieving physical discomfort, thereby enhancing wellbeing of the occupants. Moreover, the indoor plants also provide various physical benefits for the indoor environment: while plants serve to dampen sounds and echoes in the indoor space, they also provide a positive impact on air quality via absorbing various indoor air impurities (such as formaldehyde, benzene, toluene) and via reducing air temperature and air humidity in their vicinity. As an example in this regard, a study of air-purifying characteristics of a 'green wall' are described in a scientific article by Torby, F. & al., "Testing the single-pass VOC removal efficiency of an active green wall using methyl ethyl ketone (MEK)" (27 Oct 2017, DOI: 10.1007/s11869-017-0518-4). Yet further, the photosynthesis by the plants results in the plants absorbing carbon dioxide (CO₂) from the air while emitting oxygen to the air. On the other hand, like any plants, the indoor plants placed in the indoor space require light, water, warmth and fertilizers in order to thrive or just to stay alive.

### SUMMARY

It is an object of the present invention to provide a technique for estimating suitable locations for one or more plants in one or more indoor or outdoor spaces or areas.

According to an embodiment of the present invention, a system for managing plants in one or more spaces or areas is provided, the system arranged to: receive respective first sensor data for a plurality of locations in said one or more spaces or areas, wherein the first sensor data comprises at least one of the following: respective occupancy data for said plurality of locations, where the occupancy data for a given location is descriptive of occupancy at the respective location as a function of time, and respective air characteristic data for said plurality of locations, where the air characteristic data for a given location is descriptive of at least one characteristic of air at the respective location as a function of time; receive respective light sensor data for said plurality of locations, wherein the light sensor data for a given location is descriptive of light level at the respective location as a function of time; and select, from said plurality of locations, one or more locations for the plants based on the first sensor data in consideration of the light sensor data.

According to another embodiment of the present invention, a method for managing plants in one or more spaces or areas is provided, the method comprising: receiving respective first sensor data for a plurality of locations in said one or more spaces or areas, wherein the first sensor data comprises at least one of the following: respective occupancy data for said plurality of locations, where the occupancy data for a given location is descriptive of occupancy at the respective location as a function of time, and respective air characteristic data for said plurality of locations, where the air characteristic data for a given location is descriptive of at least one characteristic of air at the respective location as a function of time; receiving respective light sensor data for said plurality of locations, wherein the light sensor data for a given location is descriptive of light level at the respective location as a function of time; and selecting, from said plurality of locations, one or more locations for the plants based on the first sensor data in consideration of the light sensor data.

The exemplifying embodiments of the invention and variations thereof presented in this patent application are not to be interpreted to pose limitations to the applicability of the appended claims. Moreover, the verb "to comprise" and its derivatives are used in the present disclosure to indicate an open limitation that does not exclude the existence of also unrecited features.

Some features of the invention are set forth in the appended claims. Aspects of the invention, however, both as to its construction and its method of operation, together with additional objects and advantages thereof, will be best understood from the following description of example embodiments when read in connection with the accompanying drawings.

### BRIEF DESCRIPTION OF FIGURES

The embodiments of the invention are illustrated by way of example, and not by way of limitation, in the figures of the accompanying drawings, where
Figure 1A illustrates a block diagram of some components of a sensor system according to an example;
Figure 1B illustrates a block diagram of some components of a sensor system according to an example;
Figure 1C illustrates a block diagram of some components of a sensor system according to an example;
Figure 1D illustrates a block diagram of some components of a sensor system according to an example;
Figure 2 illustrates a block diagram of some components of a sensor node according to an example.
Figure 3 illustrates a method according to an example; and
Figure 4 illustrates a block diagram of some components of an apparatus according to an example.

### DESCRIPTION OF SOME EMBODIMENTS

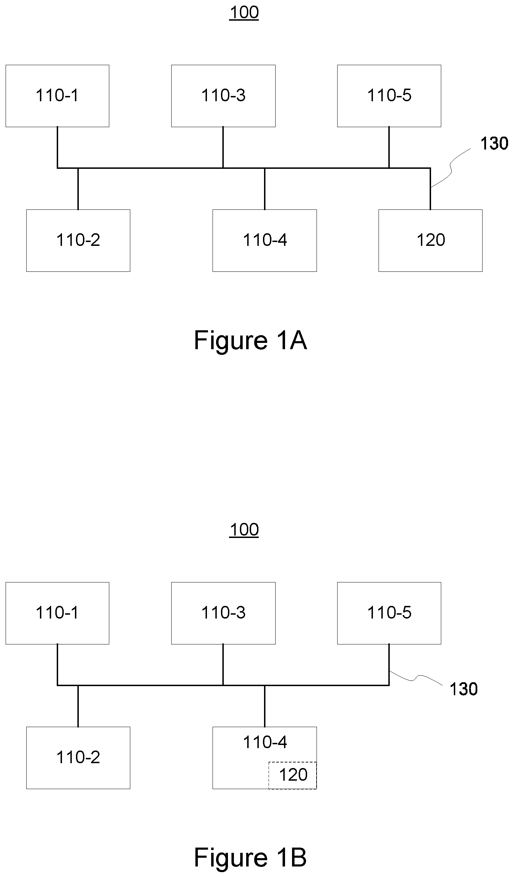

Figure 1A illustrates a block diagram of some elements of a sensor system 100 according to an example, which sensor system 100 may serve as the framework for implementing a plant management procedure according to the present disclosure. The sensor system 100 according to the example of Figure 1A comprises sensor nodes 110-1, 110-2, 110-3, 110-4, 110-5 that are communicatively coupled to each other via a communication network 130. The sensor nodes 110-1, 110-2, 110-3, 110-4, 110-5 represent a plurality of sensor nodes that may be collectively referred to via a reference number 110, whereas an individual sensor node may be referred to via a reference number 110-k.

The plurality of sensor nodes 110 and the communication network 130 connecting the sensor nodes 110-k to each other may be collectively referred to as a sensor network. The sensor system 100 may be arranged for observing various environmental characteristics in one or more indoor spaces and, therefore, each of the sensor nodes 110-k may be arranged in a respective location within the one or more indoor spaces to observe environmental characteristics at the respective location of the one or more indoor spaces.

The sensor system 100 may further comprise a processing apparatus 120, which is communicatively coupled to at least one of the plurality of sensor nodes 110. In the example of Figure 1A the processing apparatus 120 is provided as a dedicated node of the communication network 130, thereby communicatively coupling the processing apparatus 120 via the communication network 130 to the plurality of sensor nodes 110. Figure 1B illustrates the sensor system 100 according to another example, where the processing apparatus 120 is integrated or embedded to the sensor node 110-4. The example of Figure 1B generalizes into the processing apparatus 120 being integrated or embedded to one of the sensor nodes 110-k, thereby providing an arrangement where the processing apparatus 120 is communicatively coupled to the other ones of the plurality of sensor nodes 110 via the sensor node 110-k.

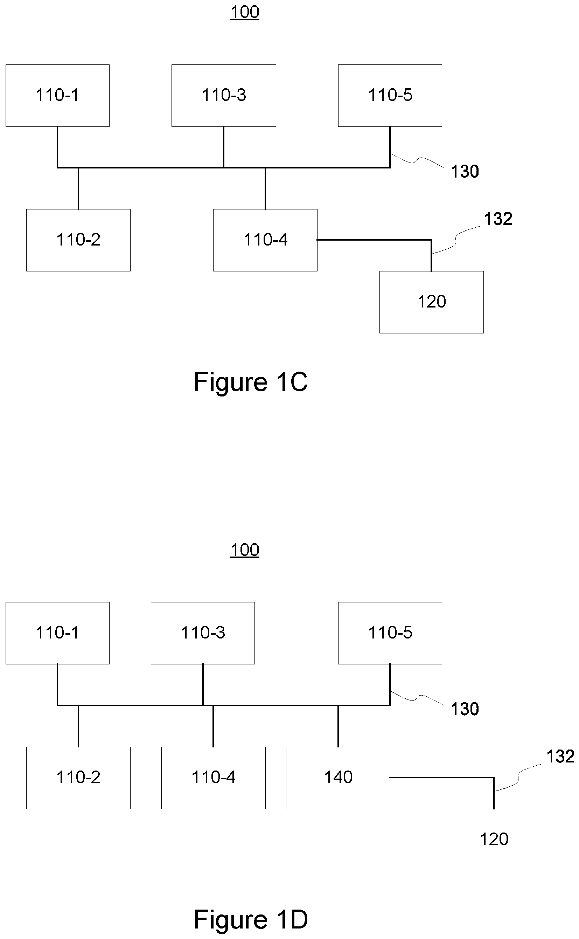

Figure 1C illustrates the sensor system 100 according to a further example, where the processing apparatus 120 is communicatively coupled to the sensor node 110-4 via an external network 132 that is separate from the communication network 130. The example of Figure 1C generalizes into the processing apparatus 120 being communicatively coupled to one of the sensor nodes 110-k via the external network 132 that is separate from the communication network 130, thereby providing an arrangement where the processing apparatus 120 is communicatively coupled to the other ones of the plurality of sensor nodes 110 via the sensor node 110-k. The external network 132 may comprise, for example, the Internet. Figure 1D illustrates the sensor system 100 according to a yet further example, where the sensor system 100 further comprises a gateway apparatus 140 for coupling external entities to the communication network 130. In this example, the gateway apparatus 140 is communicatively coupled to the plurality of sensor nodes 110 via the communication network 130, whereas the processing apparatus 120 is communicatively coupled to the gateway apparatus 140 via the external network 132.

The plant management procedure according to the present disclosure is applicable for managing one or more plants within the one or more spaces based on sensor data obtainable from the sensor system 100 operating in the one or more spaces. The plant management procedure according to present disclosure may be especially advantageous for managing one or more indoor plants in one or more indoor space and hence the description herein and the examples provided throughout the present disclosure predominantly refer to the one or more indoor plants within one or more indoor spaces. However, the plant management procedure according to the present disclosure readily generalizes into one that pertains to one or more plants in one or more indoor or outdoor areas or spaces that are monitored by the plurality of sensor nodes 110 of the sensor system 100.

The sensor system 100 may be also referred to as a plant management system due to its (secondary) role of carrying out the plant management procedure based on the sensor data captured at the plurality of sensor nodes 110. While the respective examples of Figures 1A, 1B, 1C and 1D only illustrate the plurality of sensor nodes 110, this is a choice made for graphical clarity and simplicity of the illustration: in some examples, the sensor nodes 110-k may be provided as respective dedicated sensor nodes of a sensor network, whereas in other examples the sensor nodes 110-k may be provided as respective sensor nodes of a communication network serving (also) a more generic purpose, such as a lighting control network or a building automation network. Moreover, in the latter type of examples, a given sensor node may be provided as a dedicated sensor node that serves no other purpose than observing the one or more environmental characteristics at its location, or the given sensor node may further serve one or more other purposes in addition to observing the one or more environmental characteristics at its location.

In a particular example of providing the sensor system 100 as part of a system or network serving also a more generic purpose, the sensor system 100 may be provided as part of a lighting system that is arranged for illuminating the one or more indoor spaces, where the lighting system comprises a plurality of luminaires that are arranged for illuminating a respective location of the one or more indoor spaces with the luminaires communicatively coupled to each other and to the plurality of sensor nodes 110-k by the communication network 130. Moreover, in the lighting system that includes the sensor system 100, each of the sensor nodes 110-k may be implemented as one of the following:
- as a stand-alone dedicated sensor node that is communicatively coupled to the other ones of the plurality of sensor nodes 110 and to the plurality of luminaires via the communication network 130, or
- as an embedded sensor node that is integrated (or embedded) to a luminaire and that is communicatively coupled to the other ones of the plurality of sensor nodes 110 and to the other ones of the plurality of luminaires via the communication network 130.

In such an example, the plurality of sensor nodes 110, the plurality of luminaires and the communication network 130 may be collectively referred to as a lighting control network, whereas the sensor plurality of sensor nodes 110 of the lighting control network, together with the communication network 110 communicatively coupling the sensor nodes 110-k to each other, (conceptually) constitutes the sensor network within the lighting control network.

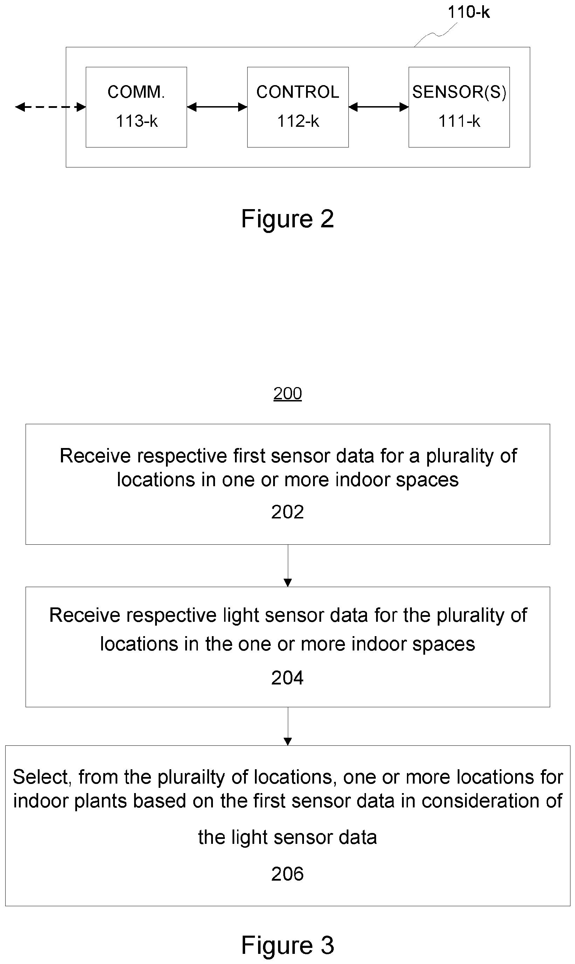

Each of the sensor nodes 110-k may be implemented as a respective sensor apparatus, as a respective sensor unit or as a respective sensor module. In this regard, Figure 2 illustrates a block diagram of some elements of the sensor node 110-k according to an example, comprising a sensor portion 111-k, a control portion 112-k, and a communication portion 113-k. The sensor portion 111-k comprises one or more sensors, each arranged to capture sensor data that is descriptive of a respective environmental characteristic at the location monitored by the sensor node 110-k. The control portion 112-k is arranged to control various aspects of operation of the sensor node 110-k and to process the sensor data captured via operation of the sensor portion 111-k. The communication portion 113-k enables (wireless and/or wired) communication with other entities of the sensor system 100 via the communication network 130.

Each of the one or more sensors of the sensor portion 111-k may be arranged to supply the control portion 112-k with a respective sensor signal that is descriptive of the respective environmental characteristics at the location monitored by the sensor node 110-k. In this regard, the one or more sensors of the sensor portion 111-k may be communicatively coupled, e.g. via respective electrical wires, to the control portion 112-k. The one or more sensors of the sensor portion 111-k may comprise respective sensors of different type. Non-limiting examples of sensors that may be included in the sensor portion 111-k include the following:
- a motion sensor for monitoring occupancy at the location monitored by the sensor node 110-k, e.g. a passive infrared (PIR) sensor, a microwave radar, a lidar, a video camera, a thermal camera, etc.;
- a light sensor for measuring ambient light level at the location monitored by the sensor node 110-k, e.g. photodetector such as photodiode;
- a temperature sensor for measuring ambient temperature at the location monitored by the sensor apparatus 110-k;
- a humidity sensor for measuring air humidity at the location monitored by the sensor node 110-k;
- a volatile organic compound (VOC) sensor for measuring total concentration of VOCs (tVOC) at the location monitored by the sensor node 110-k.

Herein, references to the sensor data being descriptive of the respective environmental characteristic *at the location monitored by* the sensor node 110-k is to be construed broadly, encompassing respective environmental characteristic in a portion of the one or more indoor spaces at the monitored location and in its vicinity.

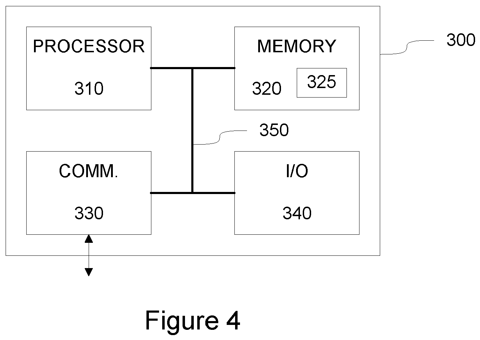

The control portion 112-k may be implemented via operation of a computer apparatus included in the sensor node 110-k. According to an example, the computer apparatus may comprise one or more processors and one or more memories, where the one or more memories are arranged to store computer program code that, when executed by the one or more processors, implements the operation of the control portion 112-k according to the present disclosure. More detailed examples of using a computer apparatus to implement the control portion 112-k are described later in this text with references to Figure 4.

Further in this regard, the control portion 112-k may be arranged to record and/or derive respective sensor indications based on respective sensor signals received from the sensor portion 111-k. The sensor indications recorded and/or derived via operation of the control portion 112-k may be referred as sensor data for the location monitored by the sensor node 110-k and the sensor data recorded and/or derived at the sensor node 110-k may comprise, for example, one or more of the following:
- occupancy data for the location monitored by the sensor node 110-k, where the occupancy data includes a time series of occupancy indications, wherein each occupancy indication may indicate e.g. one of occupancy or non-occupancy at a respective time instant, a likelihood of occupancy at the respective time instant, or a measure that is at least indirectly descriptive of a number of occupants at the respective time instant;
- light sensor data for the location monitored by the sensor node 110-k, where the light sensor data includes a time series of light level indications, wherein each light level indication may be descriptive of observed light level at a respective time instant;
- temperature sensor data for the location monitored by the sensor node 110-k, where the temperature sensor data includes a time series of temperature indications, wherein each temperature indication may be descriptive of air temperature at a respective time instant;
- humidity sensor data for the location monitored by the sensor node 110-k, where the humidity sensor data includes a time series of humidity indications, wherein each humidity indication may be descriptive of air humidity at a respective time instant;
- tVOC sensor data for the location monitored by the sensor node 110-k, where the tVOC sensor data includes a time series of tVOC indications, wherein each tVOC indication may be descriptive of total concentration of VOCs at a respective time instant.

In this regard, each sensor of the sensor portion 111-k may substantially continuously provide respective sensor data that enables the control portion 112-k to record and/or derive the respective time series of sensor indications, thereby providing sensor data that is descriptive of the respective environmental characteristic as a function of time. The control portion 112-k may store at least part of the sensor data into the memory provided in the sensor node 110-k and/or provide at least part of the sensor data to the processing apparatus 120 for further processing and/or analysis therein.

Along the lined described in the foregoing, the communication portion 113-k enables communicative coupling with other nodes of the lighting control network using wired or wireless communication means. Wired communication (as implied via respective illustrations of Figures 1A, 1B, 1C and 1D) may be provided via implementing the communication network 130 as a wired network or as a wired bus. Especially in examples where the sensor system 100 is provided as part of a lighting system, the communication over the wired network or wired bus may be provided using a predefined lighting control protocol, such as the Digital Addressable Lighting Interface (DALI) specified in a series of technical standards IEC 62386. Other examples of providing the communication over the wired network or wired bus serving as the communication network 130 include Power over Ethernet (PoE) and packet switched communication networks such as Internet Protocol (IP) based networks. In further examples, the communication network 130 may be provided as a wireless short-range communication network. Non-limiting examples of suitable wireless communication techniques for implementing the communication network 130 include Bluetooth, Bluetooth Low-Energy (LE), ZigBee, WLAN/Wi-Fi according to an IEEE 802.11 family of standards. In a particular example of making use of wireless communication techniques, the communication network 130 may be provided as a wireless mesh network, e.g. one according to the Bluetooth or Bluetooth LE Mesh networking protocol. Communication between entities of the communication network 130 may apply a communication protocol known in the art, such as the Matter standard known in the art.

The sensor system 100 may, optionally, include one or more further sensor nodes in addition to the sensor nodes 110-k described above. As an example in this regard, with the sensor system 100 may comprise a respective further sensor node for at least some of the one or more indoor plants. Each further sensor node comprises one or more sensors arranged for monitoring respective one or more characteristics of the respective indoor plant, e.g. one or more of the following: soil humidity, soil temperature, pH of the soil, humidity in immediate vicinity of the respective plant, temperature in immediate vicinity of the plant, oxygen level at immediate vicinity of the respective plant, light level at immediate vicinity of the respective plant, tVOC concentration at immediate vicinity of the respective plant, etc. The further sensors nodes may be similar to the sensor nodes 110-k in terms of their structure and operation, *mutatis mutandis*, and they may be coupled to the processing apparatus 120 via the communication network 130 to enable transferring the sensor data captured therein to the processing apparatus.

Various characteristics of the plant management procedure carried out in the framework of the sensor system 100 may be provided directly via operation of the processing apparatus 120 and/or via operation of sensor nodes 110-k under control of the processing apparatus 120. The processing apparatus 120 may be implemented via operation of a computer apparatus that comprises one or more processors and one or more memories, where the one or more memories are arranged to store computer program code that, when executed by the one or more processors, implements the operation of the processing apparatus 120. More detailed examples of using a computer apparatus to implement the processing apparatus 120 are described later in this text with references to Figure 4.

Along the lines described in the foregoing, the plant management procedure provided via operation and/or under control of the processing apparatus 120 may rely on at least part of the respective sensor data captured at the sensor nodes 110-k. In this regard, the sensor data available for the plant management procedure may be divided into first sensor data and light sensor data, where the first sensor data includes occupancy sensor data and/or air characteristic data. Herein, the air characteristic data considered in the plant management system may include any combination of the temperature sensor data, the humidity sensor data and the tVOC sensor data obtained for the location monitored by the sensor node 110-k may be collectively referred to as air characteristic data for the location monitored by the sensor node 110-k. In other words, in various examples, the air characteristic data may comprise one of the following:
- each of the following: the temperature sensor data, the humidity sensor data and the tVOC sensor data;
- any two of the following: the of the temperature sensor data, the humidity sensor data and the tVOC sensor data;
- any one of the following: the of the temperature sensor data, the humidity sensor data and the tVOC sensor data;

The conceptual division to the first sensor data and the light sensor data serves to facilitate plant management that separately accounts, on one hand, for locations where indoor plants are considered to bring physical and psychological benefits for occupants of the one or more indoor spaces and, on the other hand, for locations where the indoor plants can be expected to thrive. This aspect of making use of the sensor data is discussed in further detail in the following. It is worth noting that sensor data is typically descriptive of the amount of light available at the respective location of the one or more indoor spaces due to 'normal' operation of the lighting system serving to illuminate the respective location and/or due to external ambient light entering the location, whereas the lighting system may be also applied to provide additional illumination for the respective location to improve the conditions for a plant possibly to be arranged therein: while this would increase the energy consumption of the lighting system, it might still provide benefits for the occupants of the one or more indoor spaces that outweigh the cost of the increased energy consumption.

The plant management procedure carried out via operation and/or under control of the processing apparatus 120 may be described as steps of a method carried out by the processing apparatus 120. As an example in this regard, Figure 3 illustrates a method 200 that includes the following steps:
- receive respective first sensor data for a plurality of locations in said one or more indoor spaces (block 202);
- receive respective light sensor data for the plurality of locations in said one or more indoor spaces (block 204); and
- select, from said plurality of locations, one or more locations for indoor plants based on the first sensor data in consideration of the light sensor data (block 206).

The respective operations described with references to blocks 202 and 203 are carried out in parallel instead carrying out them in the order illustrated in Figure 3. Moreover, the method 200 may be implemented and/or varied in a number of ways, for example in accordance with the examples described in the foregoing and/or in the following. In this regard, aspects described as respective characteristics of the method 200 likewise pertain to operation of one or more elements of the sensor system 100 and, vice versa, aspects described as respective characteristics of operation of one or more elements of the sensor system 100 likewise pertain to the method 200.

The first sensor data (cf. block 202) and the light sensor data (cf. block 204) for the plurality of locations in the one or more indoor spaces comprise the respective sensor data recorded and/or derived at the plurality of sensor nodes 110. Along the lines described in the foregoing, the first sensor data for the plurality of locations comprises one or both of the following:
- respective occupancy data for the plurality of locations, where the occupancy data for a given location is descriptive of occupancy at the respective location as a function of time,
- respective air characteristic data for the plurality of locations, where the air characteristic data for a given location is descriptive of at least one characteristic of indoor air at the respective location as a function of time.

Moreover, the light sensor data for a given location is descriptive of observed light level at the respective location as a function of time. Furthermore, as described in the foregoing, the air characteristic data considered in the course of the method 200 may comprise any one, any two, or each of the following:
- respective air temperature data for the plurality of locations, where the air temperature data for a given location is descriptive of the air temperature at the respective location as a function of time;
- respective air humidity data for the plurality of locations, where the air humidity data for a given location is descriptive of the air humidity at the respective location as a function of time;
- respective tVOC data for the plurality of locations, where the tVOC data for a given location is descriptive of the total concentration of VOCs at the respective location as a function of time.

While the examples provided in the present disclosure apply the air temperature data, the air humidity data and the tVOC data as respective examples of air characteristic data applicable for selecting the one or more locations for the indoor plants within the one or more indoor spaces, these types of air characteristic data serve as non-limiting examples and other types of air characteristic data may be applied instead of or in addition to the air temperature data, the air humidity data and the tVOC data.

The examples provided in the following discuss some details of two different approaches for making use of the first sensor data together with the light sensor data for selecting the one or more locations for the indoor plants within the one or more indoor spaces in an advantageous manner (cf. block 206). These examples are, however, non-limiting ones and the plant management procedure according to the present disclosure is not to be construed as one limited to one or both of these approaches.

Throughout different approaches, the first sensor data and the light sensor data considered in selection of the one or more locations includes respective sensor indications obtained for a first time period of interest, which may be referred to as a learning period or as an observation period. The duration of the learning period may be chosen according to the circumstances, e.g. in consideration of characteristics and/or the intended purpose of the one or more indoor spaces and the duration of the learning period may be in a range from a few days to a few weeks. The learning may also account for the month of the year or the season of the year, e.g. via adjusting or selecting the duration of the learning period in dependence of the current month or season of the year.

In a first approach, the selection of the one or more locations comprises selecting the one or more locations from said plurality of locations based on a first and second selection rules that are weighted with respect to each other in a predefined manner, where the first selection rule involves application of one or more first selection criteria that pertain to the first sensor data and the second selection rule involves application of second one or more selection criteria that pertain to the light sensor data. In this regard, the respective weights for the first and second selection rules are selected such that they provide a desired trade-off between using the indoor plants to enhance wellbeing of occupants of the one or more indoor spaces (e.g. via improved air quality) and placing the indoor plants in locations where they can be expected to thrive. Basically, there are three different scenarios in this regard:
- in a first scenario, the first selection rule is assigned a first weight and the second selection rule is assigned a second weight, wherein the first weight is higher than the second weight, thereby favoring occupant-friendly locations over plant-friendly locations,
- in a second scenario, the first selection rule is assigned a first weight and the second selection rule is assigned a second weight, wherein the first weight is lower than the second weight, thereby favoring plant-friendly locations over occupant-friendly locations,
- in a third scenario, the first selection rule is assigned a first and the second selection rule is assigned a second weight, wherein the first weight is substantially equal to the second weight, thereby not favoring occupant-friendly locations over plant-friendly locations or vice versa.

In a further scenario, only the first selection rule is applied, thereby corresponding to the first scenario with the first weight set to unity and the second weight set to zero. In such a scenario, the lighting system applied for illumination of the one or more indoor spaces may be applied for ensuring sufficient light level for the plants arranged into the selected one or more locations. In another further scenario, only the second selection rule is applied, thereby corresponding to the second scenario with the first weight set to zero and the second weight set to unity.

In the first and second scenarios, the respective values for the first and second weights may be chosen, for example, in view of characteristics of the one or more indoor spaces, in view of expected purpose of the one or more indoor spaces, in view of personal preferences, etc. such that a desired extent of favoring one of the occupant-friendly locations and the plant-friendly locations over the other one is provided.

The one or more first selection criteria applied in the first selection rule include the respective one or more criteria to each of the environmental characteristics considered in the first sensor data. Consequently, in various examples, the one or more first selection criteria may include one or more of the following:
- one or more occupancy criteria that favor locations of high occupancy rate,
- one or more temperature criteria that favor locations of high air temperature and/or locations where the air temperature is within a predefined range,
- one or more humidity criteria that favor locations of low air humidity,
- one or more tVOC criteria that favor locations of high total concentration of VOCs.

According to an example, the one or more occupancy criteria include a first occupancy criterion that prefers locations of higher occupancy rate over locations of lower occupancy rate and/or a second occupancy criterion that defines selection of locations in which the occupancy rate exceeds a predefined occupancy rate threshold (and non-selection of locations in which the occupancy does not exceed the occupancy rate threshold). Herein, the occupancy rate for a given location may indicate e.g. a percentage of time (e.g. over the learning period) with the given location being occupied.

According to an example, the one or more temperature criteria include a temperature criterion that defines selection of locations in which the air temperature is within the predefined air temperature range and, conversely, defines non-selection of locations in which the air temperature is outside the predefined air temperature range. In this regard, the predefined air temperature range may cover temperatures that are slightly too high for a typical occupant e.g. due to exposure to the sunlight but where the indoor plant may be helpful in reducing or eliminating the exposure to the sunlight. According to another example, the one or more temperature criteria include a first temperature criterion that prefers locations of higher air temperature over locations of lower air temperature and/or a second temperature criterion that defines selection of locations in which the air temperature exceeds a predefined air temperature threshold (and defines non-selection of locations in which the air temperature does not exceed the air temperature threshold).

According to an example, the one or more humidity criteria include a first humidity criterion that prefers locations of lower air humidity over locations of higher air humidity and/or a second humidity criterion that defines selection of locations in which the air humidity is below a predefined air humidity threshold (and defines non-selection of locations in which the air humidity exceeds the air humidity threshold). Alternatively, the second humidity criterion may be one that defines selection of locations in which the air humidity is within a predefined air humidity range (and defines non-selection of locations in which the air humidity is outside the predefined air humidity range).

According to an example, the one or more tVOC criteria include a first tVOC criterion that prefers locations of higher total concentration of VOCs over locations of lower total concentration of VOCs and/or a second occupancy criterion that defines selection of locations in which the total concentration of VOCs exceeds a predefined tVOC concentration threshold (and non-selection of locations in which the total concentration of VOCs does not exceed the tVOC concentration threshold). Alternatively, the second tVOC criterion may be one that defines selection of locations in which the total concentration of VOCs is within a predefined tVOC concentration range (and defines non-selection of locations in which the total concentration of VOCs is outside the tVOC concentration range).

Still referring to the first approach, the one or more second selection criteria applied in the second selection rule include one or more light level criteria that favor locations of high light level. According to an example, the aspect of light level under consideration is an average light level over time and the one or more light level criteria include a first light level criterion that prefers locations of higher average light level over locations of lower average light level and/or a second light level criterion that defines selection of locations in which the average light level exceeds a predefined average light level threshold (and defines non-selection of locations in which the average light level does not exceed the average light level threshold). Alternatively, the second light level criterion may be one that defines selection of locations in which the average light level is within a predefined light level range (and defines non-selection of locations in which the average light level is outside the light level range). In other examples, the aspect of light level under consideration may be different from the average light level over time, e.g. a minimum light level, a maximum light level, a percentage of time (e.g. over the learning period) during which the light level exceeds a predefined reference light level, etc., whereas the one or more light level criteria applied for the respective alternative aspect of light level may be similar to those described above with references to the average light level over time, *mutatis mutandis.*

In a further example, the one or more second selection criteria applied in the second selection rule may further consider one or more aspects of light spectrum. As an example in this regard, the one or more second selection criteria may include a first light spectrum criterion that prefers locations where the received light includes wavelengths within a predefined wavelength range over locations where the received light does not include wavelengths within the predefined wavelength range and/or a second light spectrum criterion that defines selection of locations where the received light includes wavelengths within the predefined wavelength range and defines non-selection of locations where the received light does not include wavelengths within the predefined wavelength range. In some examples, the first and/or second light spectrum criterion are applied without the one or more light level criteria described above, whereas in other examples the first and/or second light spectrum criterion are applied together with the one or more light level criteria.

In various examples in the framework of the first approach, the one or more first selection criteria of the first selection rule and the one or more second selection criteria of the second selection rule may be applied to select a predefined number of locations within the one or more indoor spaces for the indoor plants or to select all those locations of the one or more indoor spaces that meet the applied first and second selection criteria.

In a second approach, the selection of the one or more locations comprises selecting the one or more locations from said plurality of locations via application of the one or more first selection criteria (described in the foregoing), obtain, for a plurality of plant species, a respective predefined light exposure requirement for the respective plant species, and select a respective plant species (from the plurality of plant species) for the one or more locations of the one or more indoor spaces based on the respective light levels indicated for the respective locations in view of the obtained light exposure requirements. Hence, the second approach results in first identifying the most occupant-friendly locations of the one or more indoor spaces in view of the applied first selection criteria, followed by choosing, from the plurality of plant species, those plant species that are most suited for the identified locations in consideration of the light levels indicated for the identified locations.

In various examples in the framework of the second approach, the one or more first selection criteria of the first selection rule may be applied to select a predefined number of locations within the one or more indoor spaces for the indoor plants or to select all those locations of the one or more indoor spaces that meet the applied first selection criteria.

After having carried out the respective operations that pertain to blocks 202 to 206 of the method 200, one or more indoor plants may be arranged into the one or more locations of the one or more indoor spaces selected via operation of the method 200. From this starting point, the plant management procedure according to method 200 may proceed to carry out one or more further aspects of the present disclosure, referred to in the following as a third approach, a fourth approach and a fifth approach.

In the third approach, the plant management system according to the method 200 further comprises, subsequent to selection of the one or more locations for the indoor plants (cf. block 206), receiving, from the plurality of sensor nodes 110, respective further first sensor data and respective further light sensor data for the plurality of locations within the one or more indoor spaces and reselecting, from the plurality of locations, the one or more locations for the indoor plants based on the first sensor data in consideration of the light sensor data. In this regard, the reselection may be carried out in a similar manner as the selection described in the foregoing with references to block 206, *mutatis mutandis.*

The further first sensor data and the further light sensor data considered in reselection of the one or more locations includes respective sensor indications obtained for a second time period of interest, which may be referred to as a relearning period, where the relearning period occurs after the learning period described in the foregoing. The duration of the relearning period may be similar to that of the learning period described in the foregoing. The reselection may be necessary e.g. due to the one or more indoor plants arranged into the selected one or more locations of the one or more indoor spaces affecting the lighting condition and/or air quality at least in some locations within the one or more spaces and/or due to the one or more indoor plants arranged in the one or more indoor spaces causing changes in occupancy patterns at least in some locations within the one or more indoor spaces.

According to an example, the reselection may be carried out repeatedly according to a predefined schedule (e.g. at predefined regular time intervals) and/or in response to command received at the processing apparatus 120 (e.g. via its user interface or over the communication network 130). In another example, carrying out the reselection is conditional to differences in respective environmental characteristics indicated by the further first sensor data and/or in the further light sensor data in relation to respective environmental characteristics indicated in the first sensor data and/or the light sensor data used as basis for the most recent earlier selection. In other words, the aspect of reselection may be carried only in response to the further first sensor data exhibiting a difference to the first sensor data applied as basis for the earlier selection and/or the further light sensor data exhibiting a difference to the light sensor data applies as basis for the earlier selection.

In some examples, the sensor system 100 may further comprise or it may be communicatively coupled, e.g. via the communication network 130 or via another wireless network to one or more self-moving pot assemblies for potting the indoor plants, where the potting assemblies are arranged for movement within the one or more indoor spaces under control of the processing apparatus 120. Moreover, the indoor plants may be potted into the one or more potting assemblies and the potting assemblies may be positioned in the one or more locations within the one or more indoor spaces after the (initial) selection via operation of the method 200. Subsequently, after the reselection, the processing apparatus 120 may control the self-moving pot assemblies to move to the reselected one or more locations, thereby providing an automated manner of adopting the reselected one or more positions for the indoor plants.

In some examples, the moveability of the indoor plants may be applied to change respective locations of the one or more indoor plants in dependence of the further first sensor data and/or the further light sensor data: for example when the occupancy sensor data indicates that the one or more indoor spaces are unoccupied, the one or more indoor plants may be moved to respective temporary locations that are considered favorable in a viewpoint of the indoor plants, whereas when the occupancy sensor data indicates occupancy in the one or more indoor spaces, the one or more indoor plants are moved back to their respective selected (or reselected) locations. In this regard, the movement of the one or more indoor plants may involve the processing apparatus 120 controlling respective self-moving pot assemblies to move to the respective temporary locations or to move back to their respective selected (or reselected) locations. Herein, the one or more temporary locations may be defined e.g. according to the second scenario described in the foregoing with the first weight set to zero and the second weight set to unity.

In various examples, a self-moving pot assembly may include a pot that is moveable between a set of locations along a rail arrangement under control of the processing apparatus 120 and/or a self-moving pot assembly may include a pot arranged on a wheeled assembly that is able to move at least within a portion of the one or more indoor spaces under control of the processing apparatus 120.

In a fourth approach, the plant management system according to the method 200 further comprises, subsequent to selection of the one or more locations for the indoor plants (cf. block 206), receiving, from the plurality of sensor nodes 110, respective further light sensor data for the plurality of locations within the one or more indoor spaces, obtaining respective light exposure requirements for respective indoor plants arranged in the selected one or more locations of the one or more spaces, and controlling, in consideration of the further light sensor data received for the selected one or more locations, light output of the one or more luminaires within the one or more spaces such that light levels in the selected one or more locations meet the respective light exposure requirements of the respective ones of the plants arranged therein. Such an approach facilitates providing improved conditions for the indoor plants arranged in the selected one or more locations of the one or more indoor spaces also in scenarios where the lighting conditions after selection of the one or more locations are different from those applied as basis for selecting the one or more locations. In a variation of the fourth approach, the plant management system according to the method 200 further comprises obtaining respective light spectrum requirements for respective indoor plants arranged in the selected one or more locations and controlling the one or more luminaires to emit light that fulfils the respective light spectrum requirements. In this regard, the light spectrum requirements for a given indoor plant may define a wavelength of visible light or a range of wavelengths of visible light preferred by the respective indoor, whereas the aspect of controlling the one or more luminaires to emit light that fulfills the light spectrum requirements may involve controlling the one or more luminaries to emit light that includes the defined wavelength or the range of wavelengths along with other wavelengths of visible light.

In the framework of the fourth approach, the processing apparatus 120 has a control interface for a lighting system, where the control interface allows for controlling respective light outputs of luminaires of a lighting arranged for illumination of the one or more indoor spaces. According to an example in this regard, the sensor system 100 may be provided as part of a lighting system (as described in the foregoing) and the processing apparatus 120 may be able to supply control information to the luminaires via the communication network 130, whereas in another example the lighting system is separate from the sensor system 100 and the processing apparatus 120 may supply the control information to the lighting system e.g. via a gateway apparatus arranged to communicatively couple the sensor system 100 to the lighting system.

In a fifth approach, the sensor system 100 includes the one or more further sensor nodes described in the foregoing and the plant management system according to the method 200 further comprises receiving respective sensor data from the one or more further sensor nodes and providing respective indications on status and/or maintenance needs of the respective indoor plants. As an example in this regard, each of the one or more further sensor nodes may comprise a respective plant-specific humidity sensor that is arranged in the soil in which the respective indoor plant is potted and arranged provide respective soil humidity indications that are descriptive of humidity level of the soil. Moreover, the plant management system according to the method 200 may further comprise, subsequent to selection of the one or more locations for the indoor plants (cf. block 206), receiving respective plant-specific humidity sensor data for respective indoor plants that are arranged in the selected one or more locations of the one or more indoor spaces, and providing an indication of watering need in response to the received plant-specific humidity sensor data indicating soil humidity that is below a predefined soil humidity threshold for at least one of the indoor plants, thereby providing an automated alert for the maintenance personnel regarding the watering need. In this regard, the indication of the watering need may include respective indications of those ones of the indoor plants for which the soil humidity fails to reach the soil humidity threshold. The indication may be provided, for example, as a visual indication shown via a user interface of the processing apparatus 120 and/or as a message transmitted from the processing apparatus 120 via the communication network 130 or via another network to an external device that is arranged to show a visual indication of the watering need.

According to an example, the one or more locations of the one or more indoor spaces selected for the indoor plants may be indicated to a user e.g. via a user interface of the processing apparatus 120 or via a user interface of another apparatus that is communicatively coupled to the processing apparatus 120 for receiving information that defines the one or more selected locations. The selected locations(s) may be indicated to the user e.g. by displaying a floorplan of the one or more spaces with the one or more selected locations marked with a predefined symbol. According to another example, the processing apparatus 120 may provide at least part of the sensor data captured via operation of the plurality of sensor nodes 110 to a user. This may be accomplished, for example, by displaying at least part of the sensor data via the user interface of the processing apparatus 120 or via a user interface of another apparatus that is communicatively coupled to the processing apparatus 120 for receiving said at least part of the sensor data. The user may use the displayed sensor data e.g. as additional input for tending the indoor plants. According to a further example, the processing apparatus 120 may receive user input e.g. via the user interface of the processing apparatus 120 or from another apparatus that is communicatively coupled to the processing apparatus 120, where the user input may pertain to controlling one or more aspects of the sensor system 100. In a particular example, the sensor system 100 may be provided as part of a lighting system and the user input may pertain to controlling one or more aspects of illumination at or close to the one or more locations selected for the indoor plants e.g. in order to increase or decrease illumination at the respective locations of the one or more indoor spaces with the aim of providing illumination levels that are well-suited for the indoor plants arranged therein (e.g. based on the sensor data displayed to the user via the user interface of processing apparatus 120 or a user interface of another apparatus).

Figure 4 illustrates a block diagram of some components of an apparatus 300 that may be employed to implement operations described in the foregoing with references to the control portion 112-k and to the processing apparatus 120. The apparatus 300 comprises a processor 310 and a memory 320. The memory 320 may store data and computer program code 325. The apparatus 300 may further comprise communication means 330 for wired and/or wireless communication with other apparatuses and/or user I/O (input/output) components 340 that may be arranged, together with the processor 310 and a portion of the computer program code 325, to provide the user interface for receiving input from a user and/or providing output to the user. The user I/O components may include user input means, such as one or more keys or buttons, a keyboard, a touchscreen or a touchpad, etc. The user I/O components may include output means, such as a display or a touchscreen. The components of the apparatus 300 are communicatively coupled to each other via a bus 350 that enables transfer of data and control information between the components.

The memory 320 and a portion of the computer program code 325 stored therein may be further arranged, with the processor 310, to cause the apparatus 300 to perform at least some aspects of operation of the control portion 112-k or the processing apparatus 120 (as applicable). The processor 310 is configured to read from and write to the memory 320. Although the processor 310 is depicted as a respective single component, it may be implemented as respective one or more separate processing components. Similarly, although the memory 320 is depicted as a respective single component, it may be implemented as respective one or more separate components, some or all of which may be integrated/removable and/or may provide permanent / semi-permanent/ dynamic/cached storage.

The computer program code 325 may comprise computer-executable instructions that implement at least some aspects of operation of the control portion 112-k or the processing apparatus 120 (as applicable). As an example, the computer program code 325 may include a computer program consisting of one or more sequences of one or more instructions. The processor 310 is able to load and execute the computer program by reading the one or more sequences of one or more instructions included therein from the memory 320. The one or more sequences of one or more instructions may be configured to, when executed by the processor 310, cause the apparatus 300 to perform at least some aspects of operation of the control portion 112-k or the processing apparatus 120 (as applicable). Hence, the apparatus 300 may comprise at least one processor 310 and at least one memory 320 including the computer program code 325 for one or more programs, the at least one memory 320 and the computer program code 325 configured to, with the at least one processor 310, cause the apparatus 300 to perform at least some aspects of operation of the control portion 112-k or the processing apparatus 120 (as applicable).

The computer program code 325 may be provided e.g. a computer program product comprising at least one computer-readable non-transitory medium having the computer program code 325 stored thereon, which computer program code 325, when executed by the processor 310 causes the apparatus 300 to perform at least some aspects of operation of the control portion 112-k or the processing apparatus 120 (as applicable). The computer-readable non-transitory medium may comprise a memory device, a record medium or another article of manufacture that tangibly embodies the computer program.

As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described.

## Claims

1. A system (100) for managing plants in one or more spaces or areas, the system (100) comprising a processing apparatus (120) arranged to:
receive respective first sensor data for a plurality of locations in said one or more spaces or areas, wherein the first sensor data comprises at least one of the following:
respective occupancy data for said plurality of locations, where the occupancy data for a given location is descriptive of occupancy at the respective location as a function of time, and
respective air characteristic data for said plurality of locations, where the air characteristic data for a given location is descriptive of at least one characteristic of air at the respective location as a function of time;
receive respective light sensor data for said plurality of locations, wherein the light sensor data for a given location is descriptive of light level at the respective location as a function of time; and
select, from said plurality of locations, one or more locations for the plants based on the first sensor data in consideration of the light sensor data.

2. A system (100) according to claim 1, wherein the processing apparatus (120) is arranged to:
select the one or more locations from said plurality of locations via usage of one or more first selection criteria that pertain to the first sensor data;
obtain, for a plurality of plant species, a respective light exposure requirement for the respective plant species; and
select, for the one or more locations, a respective plant species from said plurality of plant species based on the respective light levels indicated for the respective locations in view of the obtained light exposure requirements.

3. A system (100) according to claim 1, wherein the processing apparatus (120) is arranged to select the one or more locations from said plurality of locations based on a first and second selection rules that are weighted with respect to each other in a predefined manner, wherein
the first selection rule involves application of one or more first selection criteria that pertain to the first sensor data, and
the second selection rule involves application of second one or more selection criteria that pertain to the light sensor data.

4. A system (100) according to claim 3, wherein the first selection rule is assigned a first weight that is higher than a second weight assigned to the second selection rule.

5. A system (100) according to claim 3, wherein the first selection rule is assigned a first weight that is lower than a second weight assigned to the second selection rule.

6. A system (100) according to any of claims 3 to 5, wherein the one or more second selection criteria include one or more light level criteria that favor locations of high light level.

7. A system (100) according to any of claims 2 to 6, wherein at least one of the following applies:
the air characteristic data for the given location comprises a respective set of sensor data that is descriptive of one of the following air characteristics at the respective location as a function of time: air temperature, air humidity, total concentration of volatile organic compounds, VOCs, in the air; and/or
the one or more first selection criteria include one or more of the following: one or more occupancy criteria that favor locations of high occupancy rate, one or more temperature criteria that favor locations where air temperature is within a predefined temperature range, one or more humidity criteria that favor locations of low air humidity, one or more tVOC criteria that favor locations of high total concentration of VOCs.

8. A system (100) according to any of claims 1 to 7, wherein the processing apparatus (120) is arranged to carry out, subsequent to selection of the one or more locations for the plants, the following:
receive respective further first sensor data and respective further light sensor data for said plurality of locations;
reselect, from said plurality of locations, the one or more locations for the plants based on the further first sensor data in consideration of the further light sensor data.

9. A system (100) according to claim 8, further comprising respective one or more self-moving pot assemblies in which said one or more plants are potted, where the self-moving pot-assemblies are arranged for movement within the one or more spaces or areas under control of the processing apparatus, wherein the processing apparatus is arranged to control the self-moving pot assemblies to move to the reselected one or more locations within the one or more spaces or areas.

10. A system (100) according to any of claims 1 to 9, wherein the processing apparatus (120) is arranged to carry out, subsequent to selection of the one or more locations for the plants, the following:
receive respective further light sensor data for said plurality of locations;
obtain respective light exposure requirements for respective plants arranged in the selected one or more locations of the one or more spaces; and
control, in consideration of the further light sensor data received for the selected one or more locations, light output of the one or more luminaires within the one or more spaces such that light levels in the selected one or more locations meet the respective light exposure requirements of the respective ones of the plants arranged therein.

11. A system (100) according to claim 10, wherein the processing apparatus (120) is further arranged to:
obtain respective light spectrum requirements for respective plants arranged in the selected one or more locations of the one or more spaces; and
control the one or more luminaires to emit light that fulfils the respective light spectrum requirements.

12. A system (100) according to any of claims 1 to 11, wherein the processing apparatus (120) is arranged to carry out, subsequent to selection of the one or more locations for the plants, the following:
receive respective plant-specific humidity sensor data for respective plants that are arranged in the selected one or more locations of the one or more spaces or areas; and
provide an indication of watering need in response to the received plant-specific humidity sensor data indicating soil humidity that is below a predefined soil humidity threshold for at least one of the plants.

13. A system (100) according to claim 1 to 12, further comprising a plurality of sensor nodes (110) that are communicatively coupled to each other and to the processing apparatus (120) by a communication network (130) and that arranged to capture the first sensor data and the light sensor data and to supply the captured first sensor data and the light sensor data to the processing apparatus (120).

14. A system (100) according to any of claims 1 to 13, wherein said one or more plants are one or more indoor plants and wherein said one or more spaces or areas are one or more indoor spaces.

15. A method (200) for managing plants in one or more spaces or areas, the method (200) comprising:
receiving (202) respective first sensor data for a plurality of locations in said one or more spaces or areas, wherein the first sensor data comprises at least one of the following:
respective occupancy data for said plurality of locations, where the occupancy data for a given location is descriptive of occupancy at the respective location as a function of time, and
respective air characteristic data for said plurality of locations, where the air characteristic data for a given location is descriptive of at least one characteristic of air at the respective location as a function of time;
receiving (204) respective light sensor data for said plurality of locations, wherein the light sensor data for a given location is descriptive of light level at the respective location as a function of time; and
selecting (206), from said plurality of locations, one or more locations for the plants based on the first sensor data in consideration of the light sensor data.
